Europäisches Patentamt

European Patent Office

Office européen des brevets

(19)

(11) EP 0 584 511 B1

(12) EUROPEAN PATENT SPECIFICATION

(45) Date of publication and mention
of the grant of the patent:
**10.03.1999 Bulletin 1999/10**

(51) Int Cl.$^6$: **D04H 1/64**, D04H 1/68

(21) Application number: **93111292.4**

(22) Date of filing: **14.07.1993**

(54) **PROCESS FOR THE PREPARATION OF A COMPOSITE TEXTILE MATERIAL**

VERFAHREN ZUR HERSTELLUNG EINES TEXTIL-VERBUNDWERKSTOFF

PROCEDE DE PREPARATION D'UN MATERIAU TEXTILE COMPOSITE

(84) Designated Contracting States:
**BE DE ES FR GB NL PT SE**

(30) Priority: **06.08.1992 IT MI921945**

(43) Date of publication of application:
**02.03.1994 Bulletin 1994/09**

(73) Proprietor: **ALCANTARA S.p.A.**
**20138 Milano (IT)**

(72) Inventors:
• **Borri, Carlo**
**I-50129 Firenze (IT)**
• **Consoli, Salvatore**
**I-30172 Venezia-Mestre (IT)**

• **Cascella, Ciro**
**I-80144 Napoli (IT)**

(74) Representative: **Cioni, Carlo et al**
**c/o STUDIO CIONI & PIPPARELLI**
**Viale Caldara 38**
**20122 Milano (IT)**

(56) References cited:
**EP-A- 0 297 317**

• **DATABASE WPI Week 7117, Derwent**
**Publications Ltd., London, GB; AN 71-30103S &**
**BE-A-757 927 (MINNESOTA MINING AND**
**MANUFACTURING COMPANY) 23 April 1971**

**Description**

The present invention relates to a process for preparing a composite textile material, and to the thus obtained material.

Processes for preparing composite synthetic "fabrics", namely microfibrous ones, are known in the art; according to these processes a polyurethane-polyurea solution is applied to a microfibrous base to obtain suede-like imitation leather, that is thereafter submitted to further treatments. Such a process is disclosed e.g. in Italian patents n. 823055, n. 839921, n. 858373, n. 873699, n. 905222, n. 921871 and in US patents US-A-3531368 and US-A-3889292 to which reference is made for any further information. The production technique of polyurethanes-polyurea in solution has been known for long time. It initially envisages to react polyether and/or polyester diols with organic diisocyanates in a so-called prepolymerization step. After dilution with solvent up to prepolymer concentration of about $20 \div 30\%$, the polymerization reaction is completed by addition of diamines in a so-called extension stage.

The urethane bond forms according to the following reaction:

$$-R\text{-}NCO + HO\text{-}R'\text{-} \rightarrow -R\text{-}NH\text{-}COO\text{-}R' \qquad (I)$$

while the ureic bond is obtained by reaction between isocyanate and diamine groups:

$$-R\text{-}NCO + H_2N\text{-}R^1\text{-} \rightarrow -RNH\text{-}CO\text{-}NH\text{-}R^1 \qquad (II)$$

To control the growth of the polymer molecular weight, alcohols or monofunctional amines, currently named stopping agents are used. Furthermore, to accelerate reactions, organometallic catalysts, such as tin dibutyldilaurate, or tertiary amines, such as triethylenediamine may be added.

Polymeric films from polyurethane-polyurea solutions are provided with enhanced properties of ageing, heat, moisture and wear resistance that make them to be used, besides in imitation leathers and suede-like leather substitutes, also in several other fields such as, e.g. paints, adhesive and sealing agents.

Above disclosed known processes have a number of drawbacks. First of all, most of aromatic amines used as extenders in reaction II are cancerogenic and require special precautions in storage and handling.

Recently, substituted aromatic amines have been proposed to replace them, such as for instance diethyltoluene diamine, 4-4' methylene-bis-(3-chloro-2, 6-diethylaniline) and 4-4' methylene-bis-(2 isopropyl-6 methylaniline) classified as non cancerogenic at Ames's test. However, their chemical behaviour in the extension reaction is not exactly the same as that of aromatic amines, and therefore it is often necessary to modify the manufacturing process without achieving the characteristics that are obtained with the use of traditional aromatic amines.

Secondly, to ensure good reproducibility of the reaction, and therefore of the final polymer characteristics, the materials used for prepolymer dilution and extension should contain less than 0.05% (w/w) of $H_2O$.

Finally, introduction in the polymer chain of free functional groups for the subsequent fixing of dyes in dyeing step, very often results in very low stability of the polymer solution with gel formation.

A principal object of the present invention is to solve above problems by a process for preparing composite textile material that does not require the use of aromatic amines nor that of materials having reduced moisture content. Another object is to provide a process for preparing polyurethane-polyurea solutions for composite textile that allows the introduction of holding groups for dyes, while giving reproducible results as well as constant and optimal characteristics of the final polymer.

Use of water in preparation of foamed polyurethanes, as blowing agent for forming the polymer immediately before its reticulation has been known for long time, the reaction involving development of gaseous carbon dioxide:

$$-R'\text{-}NCO + H_2O \rightarrow -R'NH\text{-}CO\text{-}OH$$

$$-R'\text{-}NH\text{-}CO\text{-}OH + -R'\text{-}NCO \rightarrow -R'\text{-}NH\text{-}CO\text{-}NH\text{-}R'\text{-} + CO_2$$

However this reaction was always used only in the production of foamed polyurethanes, alternatively to or together with the use of other blowing agents such as chloro-fluorocarbides and methylene chloride. The use of water on the contrary was always avoided in the production of polyurethane-polyurea solutions since reactions of prepolymer extension where water was present as reagent were thought non to be sufficiently reproducible and therefore not appropriate in the industry.

This technical prejudice is so rooted that the moisture content of solvents and reagents used for prepolymer dilution and its extension reaction according to the known technique must be less than 0.05% in weight of $H_2O$.

An example of the use of water is given in EP-A-0.297.317 disclosing a method to manufacture foamed materials wherein isocyanate component is reacted with polyol component in the presence of organic foaming agent and/or water in a condition that a quantity of the isocyanate component is present in excess of the stoichiometric equivalent quantity to the polyol component and water.

It has been surprisingly found that the prepolymer extension reactions using water as extender were perfectly reproducible and that carbon dioxide forming during the reaction is released from the solution without causing any undesired effect when the extension reaction takes place in solution i.e. both the prepolymer and the extended polyurethane are soluble and are dissolved in an organic solvent and the amount of free isocyanate groups and water are in a well defined range.

According to the present invention there is provided a process for the preparation of composite textile materials according to claim 1.

The polymer solution obtained according to the invention differs from polyurethanes-polyurea obtained according to the known technique since it does not possess free amine extenders, these reagents being not used in the reaction.

On the contrary, in a traditional polymer, it is possible to find the presence of free amine extenders (diamines) or, alternatively, free isocyanate groups.

The process according to the invention moreover presents several advantages, besides that of avoiding handling of aromatic amines.

In fact, since the reaction between isocyanate group and water is much quicker than that between isocyanate group and alcohol or amine group, the prepolymer extension reaction, according to the present invention, is about 4-6 times shorter, at the same temperature and with the same type of isocyanate, than state-of-the-art extension reactions.

This results in an increased exploitability and production capacity of industrial plant. A further advantage of the invention is given by the fact that, thanks to the reaction between isocyanate and water to produce polyurethanes-polyurea, in organic solvent solution, it is no longer necessary to use low moisture content solvents and reactants, with considerable economic advantages.

Another qualifying feature of the present invention is that, by utilizing the reaction between isocyanate and water to extend the diluted prepolymer, it is possible to overcome all those barriers that up to now prevented addition polyurethane chain of compounds having free functional groups such as, e.g.:

$$-COOH, -OH, =N-CH_3$$

in order to have a better fixing of acidic, basic and premetallized organic dyes and an easier dyeing of polyurethane-polyurea in final product.

According to a preferred embodiment, in the process of the invention, the urethane group is formed by having an organic diisocyanate prereact at a temperature of 50 to 90°C with polyol polyethers and/or polyesters having molecular weight within 300 to 4000, in a diisocyanate/polyol molar ratio ranging between 1.5/1 and 6.5/1.

After dilution with a solvent, whose moisture content may vary from 0.005 to 1.6% (w/w), still free isocyanate groups are reacted with water at a temperature of 25 to 80°C in the presence or absence of monofunctional alcohols or amines acting as stopping agents. Alternatively it is possible to perform water addition together with the dilution solvent.

The extension reaction is carried out on a prepolymer having a content of free isocyanate (intended as weight of the prepolymer containing NCO groups on the total weight of the mixture contained in the reactor, solvent included) of from 0.8% - 1.6%. Water is added within a time from 2 minutes to 10 hours. The extender/stopping agent ratio is preferably in the order of 3.7/2.

Suitable diols are polyethers, e.g. polyoxyethylene glycol, polyoxypropylene glycol, polyxytetramethylene glycol, or polyesters, e.g. polyethylene adipate glycol, polypropylene adipate glycol, polytetramethylene adipate glycol, or polyesters such as polycaprolactone-diol or mixed such as polyethylene-polypropylene adipate glycol.

Above disclosed diols may be used alone or as a mixture, taking into consideration the higher rigidity provided to the polymer by polyester diols and the higher resistance to low temperatures hydrolysis provided to the polymer by polyether diols.

According to a further advantageous feature of the present invention, together with previously described polyol polyethers and polyester diols, it is possible to use in mixture compounds containing tertiary nitrogen atoms such as, for instance, N-methylamino-bis propylamine, N-methly-diethanolamine, N-isobutyl-diethanolamine or 1-4 bis amino-propylpirazine, in order to have an easier fixing of acidic dyes and an easier dyeing of polyurethane-polyurea.

In the same way, it is possible to use compounds containing both alcohol and carboxyl (oxyacid) functional groups such as for instance 2-2-dimethylolpropionic acid to allow the anchorage of basic dyes, and to use compounds containing both alcohol and amine (amine alcohols) groups such as diisopropanolamine or diethanolamine in order to favour the anchorage of dyes.

The molar ratio between polyol polyether and/or polyester diol and the substances containing tertiary nitrogen atoms or carboxyl groups or alcohol groups, like those described above, can vary from 1:0.01 to 1:3 as a function of the degree of dyability that is intended to be given to polyurethane-polyurea polymer.

Organic diisocyanates used may be aromatic, such as 2-4/2-6 toluenediisocyanate, in any ratio of 2-4/2-6 isomers (better if in the 80/20 ratio), or such as 4-4'-diphenylmethane diisocyanate alone or in mixture with 2-4' isomer, in the reciprocal weight ratio ranging between 0.01 and 50% of the 2-4' isomer, or such as mixtures of toluenediisocyanate and diphenylmethane diisocyanate in any ratio of each other and their isomers.

Furthermore it is possible to use aliphatic and cyclo aliphatic isocyanates, such as hexamethylene diisocyanate, 2-2-4 trimethyl hexamethylene diisocyanate, 4-4' dicyclohexylmethane diisocyanate, 3-isocyanate methyl 3-5-5 trimethyl cyclohexyl isocyanate or mixtures thereof in any ratio.

Solvents to be used in the extension reaction are dimethylformamide, dimethylacetamide, dimethylsulfoxide, acetone, methylethyl ketone, toluene, cyclohexane, tetrahydrofuran, ethyl acetate, 2-ethoxyethyl acetate and isopropanol.

As above mentioned, solvents used for diluting prepolymer and for its extension reaction may have moisture contents ranging between 0,005 and 1,6% in weight. In an industrial process the solvent can be recovered by distillation from the solution after the use of the polymer contained therein. In the case where the solvent is DMF, the latter presents after distillation a moisture content of about 0,03% in weight. In the following example reference will be made to said type of DMF unless otherwise specified; however, it should be clear that use of such DMF is not to be seen as mandatory, one of the invention advantages being the possibility of using high moisture content solvents. In the specific application of the invention to the production of synthetic suede-like leathers, the latters are prepared in the following way.

Filaments are first prepared by coextruding microfibers ("islands") of polyethylene terephthalate or 6- or 6-6-polyamide, of 0.01 to 0.40 deniers and preferably in the range of 0.08-0.15 deniers, in a polystyrene or styrene copolymer matrix acting as voluminizing "sheath" (or "sea"). Generally the filaments are provided with the following characteristics: 1.4 to 10 deniers and preferably 3.4 to 3.8; length of from 40 to 60 mm and preferably of 49-51 mm; draft ratio from 2/1 to 5/1; 4 to 15 crimps per 1 cm. Furthermore the filaments may contain 4 to 15 parts by weight of polyethylene terephthalate or 6- or 6-6 polyamide, 20-50 parts by weight of polystyrene matrix and optionally about 3 parts by weight of polyethylene glycol, the latter being included in the polystyrene matrix. The massed filaments are processed into a felt. The felt is next submitted to needle punching to form a punched felt having density of 0.15-0.35 g/cm$^3$. The punched felt is then immersed into an aqueous solution of polyvinyl alcohol, e.g. a 20% (w/w) solution and, after drying, is immersed into halogenated hydrocarbon such as trichloroetylene or perchloroethylene up to polystyrene matrix dissolution. The resulting product is dried and is the nonwoven fabric of polyethylene terephthalate or 6-or 6-6 polyamide microfibers, to which elastomeric polyurethane is applied.

Elastomeric polyurethane, in the form of organic solvent solution of polyurethane-polyurea polymer, is prepared according to above disclosed method.

Among the afore-mentioned reactants 4-4' diphenylmethane diisocyanate is preferred isocyanate; as polyester diol, polycaprolactone diol is preferably used with molecular weight in the range of 1,900-2,100 and as polyether diol, polyoxytetramethylene glycol is preferably used with molecular weight in the range of 1,900-2,100. In the diol mixture the weight ratio between polyether diol and polyester diol is usually from 1/9 to 9/1 with preferred values from 1/4 to 4/1 and optimal values of 3/1.

In the preparation of the intermediate prepolymer, organic diisocyanate and diol mixture are conveniently reacted in a molar ratio ranging between 2.75 and 2.86, preferably between 2.79 and 2.83 operating with a reaction time of 2-5 hours, at a temperature of 50-90°C, in the absence of solvent or diluent.

As described above, the preprolymer is extended by reacting it with water in an organic solvent as afore-specified and preferably in N,N'-dimethyl formamide or in N,N-dimethyl acetamide, using a water diol molar ratio of from 1 50 to 1.71, preferably from 1.57 to 1.65, with respect to diols used to form the prepolymer, and operating at a temperature ranging between about 30 and 80°C.

The water solution is gradually added diluted in the same organic solvent used to dilute the prepolymer. The reaction can be carried out in presence of an aliphatic monoamine, specially n-dibutylamine, in amounts in the range of 0.083-0.100 moles for each mole of water.

The microfibrous non woven fabric of polyethylene terephthalate or 6- or 6-6 polyamide is then impregnated by immersion in the polyurethane elastomer solution obtained as above, the impregnated product is squeezed by passing it through a couple of rollers and then coagulation in water is carried out, e.g. at 20-50°C.

Thus, a coagulated sheet is obtained that is treated in hot water, e.g. at about 80°C to extract the residual solvent and the polyvinyl alcohol, dried, sliced into sheets of 0.6-1.5 mm thickness and the sheets are submitted to buffing by abrasion to rise the fibers. The raw synthetic composite microfibrous non woven fabric thus obtained undergoes dyeing, drying and finishing operations.

The synthetic composite microfibrous non woven fabric thus obtained is provided with good general characteristics and, with respect to state of the art products, with improved characteristics as far as softness is concerned.

Furthermore, the use of water as chain extended enables a reduction of prepolymer extension time besides avoiding all inconveniences related to toxicity of diamines used in state of the art process.

The following examples will better clarify the object of the present invention.

In the description of examples, the following abbreviations have been used to denominate the raw materials used:

| ABBREVIATION | COMPOUND |
|---|---|
| PTHF | Polytetrahydrofuran (polyoxytetramethylene glycol) |
| PEG | Polyoxyethylene glycol |
| PPG | Polyoxypropylene glycol |
| PCL | Polycaprolactone diol |
| PTMAG | Polytetramethylene adipate glycol |
| PEAG | Polyethylene adipate glycol |
| PPAG | Polypropylene adipate glycol |
| TDI | 80/20 2-4/2-6 Toluene diisocyanate |
| MDI | 4-4' diphenylmethane diisocyanate |
| IPDI | 3 -Isocyanate methyl 3-5-5 trimethylcyclohexyl isocyanate |
| DAPM | 4-4' Diamino diphenylmethane |
| N-M-DEOA | N-Methyl diethanolamine |
| 1-4-BDO | 1-4 Butanediol |
| DBA | n-Dibutylamine |
| DEA | Diethylamine |
| DIPA | Diisopropanolamine |
| DMF | N-N' Dimethylformamide |

Examples 1 and 2 served as reference base, while examples 3-8 served for exemplifying the invention. The subsequent example 9-20 illustrate the particular application of the invention to the production of synthetic suede-like leathers.

EXAMPLE N. 1

In a 2.5 liter reactor, under nitrogen, 292.1 g of PTHF and 97.4 g of PCL, both of molecular weight 2000, were reacted at 65°C and under stirring with 96.9 g of MDI with isocyanate/polyols molar ratio of 2/1. After 3 hours from the beginning of the reaction, the prepolymer thus obtained was diluted with DMF, having a water content of 0.03%, to obtain a 25% solution of prepolymer, with a free NCO content equal to 0.72%. After the addition of 0.1 moles/NCO mole of dibutyl-tin dilaurate to accelerate the reaction, 12.3 g of 1-4 BDO and 1.7 g of methanol diluted in 42.1 g of DMF were added to obtain a polymer having molecular weight of about 18,000.

After stirring for 40 hours at 65°C, a stable polyurethane solution having viscosity of 8000 mPa.sec. at 20°C and 0.0025% free NCO content was obtained.

A small amount of the polyurethane solution thus obtained was then placed between two glass plates and dried to give a film about 0.25 mm thick. The polyurethane film thus obtained was then submitted to physico-mechanical characterization whose results are reported in Table 1.

EXAMPLE N. 2

In the same reactor and under the same operative conditions described in example n. 1, 280.9 g of PTHF and 93.6 g of PCL, both having m.w. 2000, were reacted with 93.2 g of MDI with Isocyanate/Polyols molar ratio of 2/1.

After 3 hours from the beginning of the reaction, the prepolymer was diluted with DMF obtaining a 25% solution of prepolymer and free NCO content of 0.73%. Then 25.8 g of DAPM and 6.7 g of DBA dissolved in 98.3 g of DMF were added to obtain a polyurethane-polyurea with molecular weight of about 18,000.

After stirring for 32 hours, a solution of stable polyurethane-polyurea was obtained having viscosity of 21000 mPa.sec. at 20°C and a 0.0015% free NCO content.

A small amount of the polyurethane-polyurea solution thus obtained was placed between two glass plated and dried to give a film about 0.25 mm thick. The film was then submitted to physico-mechanical characterization whose results are reported in Table 1.

EXAMPLE N. 3

This example follows the example n. 2 with the difference that prepolymer extension reaction was carried out with water and isocyanate. For this purpose, in the same reactor as in example n. 1 and under the same operative conditions, 280.9 g of PTHF and 93.6 g of PCL having m.w. 2000 were reacted with 93.2 g of PDI with Isocyanate/Polyols molar ratio of 2/1.

After 3 hours from the beginning of the reaction, the prepolymer was diluted with DMF to obtain a 25% solution of prepolymer and a free NCO content of 0.73%. After cooling the solution to 45°C, 33.6 g of MDI were added to increase the free NCO content up to 1.31% value.

Then, keeping the temperature at 45°C, 4.8 g of water, 7.2 g of DBA diluted in 100.1 g of DMF were gradually added in one hour time so as to obtain a polyurethane-polyurea of molecular weight of about 18000.

After increasing the reactor temperature to 65°C, the mixture was kept under stirring for 8 hours, finally obtaining a polyurethane-polyurea solution, time stable, with viscosity at 20°C of 19500 mPa.sec. and without free NCO.

A small amount of the polyurethane-polyurea solution thus obtained was placed between two glass plates and dried to give a film of about 0.25 mm thick. The polyurethane-polyurea film was then submitted to physico-mechanical characterization, whose results are reported in Table 1.

TABLE 1

| Example n. | Type of Polymer | Tear strength Tensile strength kg/cm$^2$ | Extensibility % |
|---|---|---|---|
| 1 | Polyurethane | 215 | 380 |
| 2 | Polyurethane-Polyurea | 450 | 830 |
| 3 | Polyurethane-Polyurea | 470 | 815 |

The examples that follow will better illustrate the reliability of the reaction of extension with water. In all following examples, unless otherwise specified, the same reactor and same operative conditions as in above examples were applied.

EXAMPLE N. 4

This example is similar to example n. 3 with the difference that the polyol polyester and its ratio with polyether were changed, all necessary isocyanate was introduced at beginning, and DBA was added prior to the prepolymer extension.

185.9 g of PTHF and 185.9 g of PEAG both of molecular weight 1900 were reacted at 60°C with 128.8 g of MDI in an Isocyanate/Polyols molar ratio of 2.63/1.

After 2 hours from the beginning of the reaction, the prepolymer was diluted with DMF to give a 25% prepolymer solution with a 1.31% free NCO content.

Still keeping the temperature at 60°C, 7.2 g of DBA diluted in 21.5 g of DMF were added.

After half an hour, the free NCO content of the prepolymer solution was 1.16% value.

At this point, 4.8 g of water diluted in 78.3 g of DMF were gradually added in 2 hours time. After 9 hours at 60°C under stirring, a stable polyurethane-polyurea solution was obtained having a viscosity at 20°C of 18.500 mPa. sec. and without free NCO.

EXAMPLE N. 5

464.5 g of PPG with molecular weight 2000 were reacted under stirring at 70°C with 98.4 g of a 50/50 TDI/MDI mixture with Isocyanates/polyol molar ratio of 2/1.

After 2 hours from the beginning of the reaction, the prepolymer thus obtained was diluted with DMF to give a 30% solution of prepolymer with free NCO content of 0.90%.

Still keeping the reaction at 70°C, 1.5 g of DEA diluted in 3.5 g of DMF were added obtaining after 15 minutes a 0.88% content in free NCO.

After addition of 40.6 g of a 50/50 TDI/MDI mixture, a 1.70% content in free NCO is obtained.

At this stage, still at the temperature of 70°C and in 3 minute time, 7 g of water diluted in 90 g of DMF were added to obtain a polyurethane-polyurea with molecular weight of 58000.

After 7 hour reaction, at the same temperature, a stable polymer without free NCO was obtained and its viscosity at 20°C of 12000 mPa.sec. only had a 10% increase in the subsequent 10 months.

EXAMPLE N. 6

330.8 g of PPG and 110.3 g of PEG, both with molecular weight 1900, were reacted with 257.4 g of TDI in an Isocyanate/Polyols molar ratio of 6.48.

After 1,5 hours the prepolymer thus obtained had a 1.5% content of free NCO. After bringing the reactor temperature to 25°C, the prepolymer was diluted with 1326 g of DMF, having 1.63% moisture content, to which 7.4 g of DBA had been added, to eventually give a 34% polyurethane-polyurea solution with molecular weight 25000.

After the reactor was kept under constant stirring at a temperature of 25°C for 24 hours, a polymer without free NCO stable in time was obtained, with a viscosity at 20°C of 15000 mPa.sec.

EXAMPLE N. 7

Using the same reactor as in previous examples and under the same operative conditions, 280.1 g PTHF and 93.4 g PCL, both with molecular weight 2000, were reacted at a temperature of 65°C under stirring with 126.7 g MDI, with Isocyanate/Polyols molar ratio was 2.72.

After 3 hour reaction, a prepolymer with 5.4% content in free NCO was obtained. After decreasing the temperature to 45°C, the prepolymer was diluted with DMF to obtain a 25% concentration of the prepolymer. Still keeping the temperature at 45°C, 4.82 g of water diluted in 78.3 g of DMF were gradually added in 2 hour time.

After bringing the temperature to 65°C, the reactor was left under stirring until the polymer had reached about 24000 mPa.sec. viscosity at 20°C. At this point, 7.6 g DIPA dissolved in 22.7 g DMF were rapidly added.

After half an hour, the NCO content was zero and polymerization was to be considered completed.

The obtained polyurethane-polyurea, with molecular weight of 17500 and theoretically containing 4 secondary oxydryl groups for each mole of polymer, had a final viscosity of 25500 mPa.sec. at 20°C that remained stable in time.

A small amount of the polyurethane-polyurea solution thus obtained was placed between two glass plates and dried to obtain a film 0.05 mm thick.

The film thus obtained underwent dyeing operations with LEVAFIX NERO EB dye, in aqueous acidic medium for 30 minutes at 50°C. After an alkaline treatment with $Na_2CO_3$ before and then with NaOH, a good and uniform dye penetration into the polyuretane-polyurea film was observed.

EXAMPLE N. 8

Using the same reactor as in previous examples and under the same operative conditions, 287.7 g PTHF and 95.9 g PCL, both with molecular weight 2000, were reacted at 75°C under stirring with 119.9 g IPDI so as to obtain an Isocyanate/polyols molar ratio of 2.7.

After 4 hours from the beginning of the reaction, 4.8 g NM-DEOA were added and reaction was continued for 30 minutes more. The free NCO content in the prepolymer reached at this stage 4.6% value.

After the reactor temperature was decreased to 45°C, the prepolymer was diluted with 1405.5 g DMF in a way to obtain a 25% concentration of the prepolymer and 1.12% content in free NCO.

Then, still keeping the temperature constant, 5.17 g DBA diluted in 15.5 g DMF were added so as to obtain at the end a polyurethane-polyurea with molecular weight 25000.

After 30 minutes, the free NCO content was 1%. At this point, 4.24 g of water diluted with 79 g DMF were gradually added in 1 hour time.

After bringing the temperature to 75°C, the reaction was continued for 12 hours more, to eventually give a polyurethane-polyurea solution, without free NCO, having 14000 mPa.sec. viscosity at 20°C that remained stable in time.

A small amount of the polyurethane-polyurea solution thus obtained was placed between two glass plates and dried to give a film 0.05 mm thick.

The film thus obtained underwent dyeing operations with the premetallized dye 1:2 IRGALAN BLUE BRL 200, in aqueous medium at 60°C for 30 minutes.

After a treatment with $Na_2SO_4$ and $(NH_4)_2SO_4$, a good and uniform dye penetration into the polyurethane-polyurea film was observed.

Subsequent washings both with nonionic detergents and trichloroethylene solvent did not highlight any dye release.

EXAMPLE N. 9

Filaments are prepared, formed by microfibers of polyethylene terephthalate (0.10-0.11 deniers), in a polystyrene matrix, having the following characteristics: 3.8 deniers, length 51 mm, 5 crimps/cm, draft ratio 2.5/1.

In particular, the fiber is formed by 57 parts in weight of polystyrene matrix and 3 parts in weight of polyethylene glycol, the latter contained in the polystyrene matrix. If observed in section, the fiber reveals the presence of 16 polyethylene terephthalate microfibers ("islands") included in the polystyrene matrix ("sea").

By means of the fiber in tuft, a raw felt is prepared that is submitted to punching to form a punched felt of 0.185 g/cm$^3$ density.

The punched felt is immersed into a 20% (w/w) aqueous solution of polyvinyl alcohol and is then dried. The punched felt thus treated is then immersed into trichloroethylene until complete dissolution of the polystyrene matrix of fibers, with subsequent formation of a microfibrous nonwoven fabric of polyethylene terephthalate. Then the drying of the nonwoven fabric thus formed is carried out.

A polyurethane elastomer is prepared separately, as a DMF solution, operating in the following way. In the first stage (prepolymerization) MDI is reacted with a nmixture of diols, formed by PTHF with 1976 nominal molecular weight and PCL with 1958 nominal molecular weight, with formation of an intermediate prepolymer with isocyanate termination.

In particular, in said first stage, the reaction time is about 3 hours and 30 minutes at a temperature of 65°C reacting 2 moles MDI and 1 mole of the mixture of diols in which the weight ratio between PTHF and PCL is 3/1. The prepolymer thus obtained is dissolved in DMF to form a 25% solution by weight. Furthermore a 25% solution by weight of DAPM containing 0.825 moles DAPM and 0.175 moles n-dibutylamine is prepared.

This solution is added to the prepolymer solution at the temperature of 65°C and is reacted until complete disappearance of free isocyanate from the solution, to form the polyurethane elastomer as a 25% (w/w) solution in N-N' dimethylformamide. Namely, disappearance of isocyanate occurs in 30 hours.

The elastomer solution thus prepared is then diluted with N-N'dimethylformamide to form a solution 13% in weight.

The nonwoven fabric prepared as described above is immersed into the polyurethane elastomer solution and the impregnated nonwoven fabric is squeezed by passing it through a couple of rollers and then immersed for one hour into a water bath at 40°C. A coagulated sheet is thus obtained, that is immersed in a water bath heated to 80°C to remove the residual solvent and polyvinyl alcohol.

After drying, a composite microfibrous sheet that is sliced in sheets 1.0 mm thick is obtained. The sheets thus obtained are then submitted to buffing abrasion to rise the fibers. In this way a raw synthetic microfibrous nonwoven fabric is obtained 0.8 mm thick that is submitted to dyeing in a "JET" equipment provided with a venturi tube. In particular the synthetic microfibrous nonwoven fabric is passed through the venturi tube for one hour operating at 125°C and in an aqueous dyeing bath containing the disperse dye DB 81, in quantity of 2% in weight with respect to the raw synthetic microfibrous non woven fabric. At the end of the treatment, a dyed synthetic suede-like leather is obtained that, after drying and finish, undergoes characterization.

In particular, the following characteristics are determined:

- Weight (ASTM D-1910)
- Longitudinal stiffness (ASTM D-1388)
- Longitudinal fold recovery (ASTM D-1295)
- Longitudinal and transverse tensile strength (ASTM D-1682)
- Longitudinal and transverse tearstrength (ASTM D-1424)
- Longitudinal and transverse shrinkage in water at 100°C (AATCC-96)
- Wear resistance (ASTM D-1175)
- Dye lightfastness (AATCC-16A)

The results of these determinations are recited in table II.

The following example are similar to example 9 for obtaining the nonwoven fabric and for its impregnation with polyurethane-polyurea solution and subsequent operations.

Example 10-20, therefore, only recite the preparation of the polyurethane elastomer in solution. The characteristics of the material of each example are recited in table II.

EXAMPLE N. 10

In the first stage 2.825 moles MDI and 1 mole diols in the 3/1 weight ratio of PTHF with m.w. 1976 and PCL with m.w. 1958 are reacted at 65°C for 2.5 hours. The prepolymer thus obtained is dissolved in DMF to form a 25% solution by weight. Moreover a 25% DMF solution (w/w) containing 1.650 moles of water and 0.175 moles of n-dibutylamine is prepared. This solution is added to the prepolymer solution at 65°C and reacted until total disappearance of free isocyanate from the solution, to form the polyurethane elastomer as 25% DMF solution (w/w) in DMF.

In particular, isocyanate disappeared within 6 hours.

EXAMPLE N. 11

For the preparation of the polyurethane elastomer, 21.833 moles of MDI and 1 mole of diols of example 10 are reacted in the same ratio and under the same conditions as in example 10. The prepolymer thus obtained is dissolved in N-N' dimethylacetamide to form a 25% solution by weight.

Furthermore a 25% DMF solution (w/w) containing 1.670 moles of water and 0.167 moles of n-DBA is prepared. This solution is added to the prepolymer solution and reacted under the same conditions as in example 2.

Disappearance of isocyanate occurs in 5 hours.

EXAMPLE N. 12

In the first step 1.750 moles MDI and 1 mole diols of example 10 are reacted in the same 3/1 weight ratio and under the same conditions. The prepolymer thus obtained is dissolved in DMF to form a 25% solution (w/w). A 25% solution in weight in DMF containing 1.500 moles of water and 0.250 moles of n-dibutylamine is prepared. This solution is added to the prepolymer solution and reacted therewith under same conditions as in example 10.

Disappearance of isocyanate occurs in 7 hour time.

EXAMPLE N. 13

For the preparation of the polyurethane elastomer, 2.800 moles MDI and 1 mole PTHF with molecular weight of 1976 are reacted at 65°C for 2 hours and 30 minutes.

The prepolymer thus obtained is dissolved in DMF to form a 25% solution (w/w). Furthermore a 25% (w/w) DMF solution containing 1.600 moles of water and 0.200 moles DBA is prepared. This solution is added to the prepolymer solution and reacted therewith under the same conditions as in example 10. Disappearance of isocyanate occurs in 6 hour and 30 minute time.

EXAMPLE N. 14

In the first stage 2.825 moles MDI and 1 mole diols in 1/1 weight ratio of PTHF with molecular weight 1976 and PCL with molecular weight 1958 are reacted at 65°C for 2 hours and 30 minutes. The thus obtained prepolymer is dissolved in DMF to form a 25% solution (w/w). Furthermore a 25% DMF solution (w/w) containing 1.649 moles of water and 0.175 moles DBA is prepared and added to the prepolymer solution until total disappearance of free isocyanate from the solution, in 7 hours.

EXAMPLE N. 15

In the first stage 2.800 moles MDI and 1 mole PCL with molecular weight 1958 are reacted at 65°C for 2 hours and 30 minutes. The prepolymer thus obtained is dissolved in DMF to form a 25% solution by weight to which a 25% solution by weight in DMF containing 1.600 moles of water and 0.200 moles DBA is added at 65°C and reacted until total disappearance of free isocyanate from the solution, in 7 hours.

EXAMPLE N. 16

In the first stage 2.825 moles MDI and 1 mole diols in 3/1 weight ratio of PTHF with molecular weight 2050 and PEAG with molecular weight 2068 are reacted at 65°C for 2 hours and 30 minutes. The prepolymer thus obtained is dissolved in DMF to form a 25% solution (w/w) to which a 25% (w/w) solution of DMF containing 1.649 moles of water and 0.175 moles DBA is added at 65°C and reacted until total disappearance of free isocyanate from the solution in 6 hour time.

EXAMPLE N. 17

In the first stage 2.825 moles MDI and 1 mole diols in the 3/1 weight ratio of PPG with molecular weight 2100 and PCL with molecular weight 1950 are reacted at the temperature of 65°C for 2 hours and 30 minutes. The prepolymer thus obtained is dissolved in DMF to form a 25% solution by weight to which a 25% solution by weight of DMF containing 1.649 moles of water and 0.175 moles DBA is added at 65°C and reacted until total disappearance of free isocyanate from the solution, in 6 hours and 30 minutes time.

EXAMPLE N. 18

In the first stage 2.787 moles MDI and 1 mole diols in 3/1 weight ratio of PTHF with molecular weight 1000 and PCL with molecular weight 3000 are reacted at the temperature of 65°C for 2 hours and 30 minutes. The prepolymer thus obtained is dissolved in DMF to form a 25% solution in weight to which a 25% solution in weight in DMF containing 1.574 moles of water and 0.213 moles DBA is added at the temperature of 65°C and left to react until total disappearance of free isocyanate present in the solution in 7 hours time.

EXAMPLE N. 19

In the first stage 2.800 moles MDI and 1 mole diols in 3/1 weight ratio, of PTHF with molecular weight 2900 and PCL with molecular weight 1000 are reacted at 65°C for 2 hours and 30 minutes. The prepolymer thus obtained is dissolved in DMF to form a 25% solution in weight to which a 25% solution in weight in DMF containing 1.600 moles of water and 0.200 moles DBA is added at 65°C and reacted until total disappearance of free isocyanate from the solution in 6 hours time.

EXAMPLE N. 20

For the preparation of the nonwoven fabric the process is similar to that of example 9 with the only variant of using 6-Nylon instead of polyethylene terephthalate. As far as the polyurethane elastomer preparation is concerned, operation is as in example 11. For the remaining process, example 9 is followed to obtain a synthetic microfibrous nonwoven fabric whose characteristics are recited in table I. In this example for the dyeing step, A.B. acid 260 is used as dye.

As visible in the following table from example 9-13, under same conditions of reaction and reagents, a substantial improvement of softness is obtained (recited as longitudinal fold recovery). Subsequent examples 13-20 disclose the possibilities of use of the invention in relation to the manufacture of different type of synthetic suede-like leather.

TABLE II

| EXAMPLE N. | 9 | 10 | 11 | 12 | 13 | 14 | 15 | 16 | 17 | 18 | 19 | 20 |
|---|---|---|---|---|---|---|---|---|---|---|---|---|
| Weight, g/m$^2$ (ASTM-D1910) | 226 | 228 | 235 | 230 | 225 | 231 | 228 | 232 | 235 | 225 | 228 | 230 |
| Longitudinal stiffness cm (ASTM-D1388) | 7,80 | 6,50 | 6,80 | 6 | 6,20 | 7 | 6 | 6,20 | 7,20 | 9,20 | 9,70 | 8,20 |
| Longitudinal fold recovery! (ASTM D-1295) | 125 | 145 | 140 | 150 | 140 | 128 | 120 | 146 | 135 | 115 | 103 | 130 |
| Longitudinal tensile strength kg/cm (ASTM D-1682) | 7,50 | 7,60 | 7 | 6,80 | 6,50 | 6,20 | 5,80 | 6,10 | 7,10 | 9,50 | 10,20 | 7,85 |
| Transverse tensile strength kg/cm (ASTM D-1682) | 4,60 | 4,90 | 4,70 | 4,50 | 4,20 | 4,25 | 3,60 | 4,10 | 3,85 | 5,70 | 6,40 | 4,90 |
| Longitudinal tear-strength Kg (ASTM D1424) | 1,30 | 1,25 | 1,35 | 1,20 | 1,10 | 1,25 | 1,05 | 1,15 | 1,20 | 1,52 | 1,68 | 1,38 |
| Transverse tear-strength kg (ASTM D1424) | 0,70 | 0,60 | 0,73 | 0,65 | 0,62 | 0,54 | 0,51 | 0,63 | 0,62 | 0,78 | 0,86 | 0,75 |
| Longit. shrinkage in water at 100°C (AATCC-96) | 1,50 | 1,55 | 1,53 | 2 | 3,10 | 3,20 | 3,25 | 2,15 | 2,05 | 0,85 | 0,70 | 1,40 |
| Transv. shrinkage in water at 100 °C (AATCC-96) | 0,50 | 0,55 | 0,52 | 0,65 | 0,75 | 0,80 | 1,10 | 0,75 | 0,55 | 0,30 | 0,20 | 0,35 |
| Wear resistance, cycles (ASTM D-1175) | 300 | 310 | 350 | 290 | 225 | 250 | 205 | 270 | 290 | 450 | 400 | 350 |
| Dye lightfastness n. (AATCC-16A) | 4 | 4 | 4 | 4 | 4 | 4 | 4 | 4 | 4 | 3 | 3 | 4 |

EP 0 584 511 B1

**Claims**

1. A process for the preparation of a composite textile material, comprising the preparation of a microfibrous nonwoven fabric base and its impregnation with a polyurethane-polyurea solution, characterized in that the polyurethane-polyurea solution is prepared according to a process comprising prepolymerization step of isocyanates and polyols, dilution step of the prepolymer thus obtained with a solvent selected among dimethylformamide, dimethylacetamide, dimethyl sulfoxide, acetone, methylethyl ketone, toluene, cyclohexane, tetrahydrofurane, ethyl acetate, 2-ethoxyethyl acetate and isopropanol, to a prepolymer solution and an extension step of said prepolymer solution carried out by water addition, the free isocyanate group content in said prepolymer, intended as weight of the free isocyanate group containing prepolymer on the overall weight of the reagents and solvent being in the range of 0.8 to 1.6%, the water amount being in the range of 0.05 to 1.6% by weight on the basis of the solvent, the so obtained polyurethane solution being utilised to impregnate the microfibrous non-woven material.

2. A process according to claim 1, characterized in that said water is added at a temperature within 30 and 80°C and in a time interval ranging between 2 minutes and 10 hours.

3. A process according to any preceding claim, characterized in that said steps of dilution with solvent and of extension with water are carried out simultaneously.

4. A process according to claim 3, characterized in that said solvent is selected between N-N' dimethylformamide and N-N' dimethylacetamide.

5. A process according to any previous claim, wherein before or during said extension reaction of the prepolymer extension, one or more compounds for fixing organic dyes, having free groups selected from - COOH, - OH, = N-CH$_3$, is added to the reaction mixture.

6. A process according to claim 5, characterized in that said fixing compounds are provided in a molar ratio, with respect to the diol or diol used, within the range 0.01/1 to 3/1.

7. A process according to any claim 1 to 6, characterized in that said isocyanate is selected from 2-4/2-6 toluene diisocyanate; 4-4' diphenylmethane diisocyanate; 3-isocyanate methyl 3-5-5 trimethyl cyclohexyl isocyanate; 4-4' dicyclohexylmethane diisocyanate; hexamethylene diisocyanate and mixture thereof.

8. A process according to any claim 1 to 7, characterized in that said polyol is selected from: polyoxytetramethylene glycol, polyoxyethylene glycol, polyoxypropylene glycol, polycaprolactone glycol, polytetramethylene adipate glycol, polyethylene adipate glycol, polypropylene adipate glycol and mixture thereof.

9. A process according to any claim 1 to 8, characterized in that said prepolymer is obtained by reacting a diisocyanate with a mixture from 1/9 to 9/1 and preferably from 1/4 to 4/1 (w/w) of polyethers/polyester diols having molecular weight ranging between 1000 and 3000.

10. A process according to claim 9, wherein said weight ratio of polyethers/polyesters is about 3/1.

11. A process according to claim 9, characterized in that said diisocyanate is 4-4' diphenylmethane diisocyanate, said polyether is polyoxytetramethylene glycol and said polyester is polycaprolactone diol.

12. A process according to claim 9 or 10, characterized in that the molar ratio diisocyanate/diols is within the range from 2.75/1 to 2.86/1, and said prepolymerization is carried out at a temperature between 50 and 90°C, in absence of solvent, with a reaction time within the range from 2 to 3 hours.

13. A process according to any previous claim, characterized in that said extension reaction is carried out in water/diols molar ratio within the range from 1.2/1 to 2.0/1.

14. A process according to any previous claim, wherein said extension is carried out in presence of n-dibutylamine, with an amine/diols molar ratio within the range from 0.083 to 0.167.

15. A process according to any previous claim, wherein said non-woven fabric is obtained by coextruding microfibers of polyethylene terephthalate or 6-polyamide or 6-6-polyamide in a polystyrene matrix, forming a nonwoven fabric from said corxtruded material, impregnating it with polyvinyl alcohol and removing said polystyrene matrix, and wherein the polyurethane-polyurea impregnated non-woven fabric is pressed between rollers, coagulated in water bath, dried, cut in sheets having pre-set thickness, superficially abraded and eventually submitted to dyeing and finishing..

## Patentansprüche

1. Verfahren zur Herstellung eines textilen Verbundmaterials, umfassend die Herstellung einer Mikrofaser-Vliesstoff-Grundlage und ihr Imprägnieren mit einer Polyurethan/Polyharnstoff-Lösung, dadurch gekennzeichnet, daß die Polyurethan/Polyharnstoff-Lösung hergestellt wird nach einem Verfahren, umfassend eine Prepolymerisationsstufe von Isocyanaten und Polyolen, eine Verdünnungsstufe des so erhaltenen Prepolymers mit einem Lösungsmittel, ausgewählt aus Dimethylformamid, Dimethylacetamid, Dimethylsulfoxid, Aceton, Methylethylketon, Toluol, Cyclohexan, Tetrahydrofuran, Ethylacetat, 2-Ethoxyethylacetat und Isopropanol, zu einer Prepolymerlösung und eine Verlängerungs- oder Extensionsstufe der Prepolymerlösung, die durch Zusatz von Wasser durchgeführt wird, wobei der Gehalt an freien Isocyanatgruppen in dem Prepolymer, zu verstehen als Gewicht des freie Isocyanatgruppen enthaltenden Prepolymers bezogen auf das Gesamtgewicht der Reagentien und Lösungsmittel, im Bereich von 0,8 bis 1,6 % liegt, die Menge an Wasser im Bereich von 0,05 bis 1,6 Gew.-%, bezogen auf das Lösungsmittel, liegt, die so erhaltene Polyurethanlösung verwendet wird, um das Mikrofaser-Vliesstoff-Material zu imprägnieren.

2. Verfahren nach Anspruch 1, dadurch gekennzeichnet, daß das Wasser bei einer Temperatur im Bereich von 30 bis 80°C und während eines Zeitintervalls zwischen 2 Minuten und 10 Stunden zugesetzt wird.

3. Verfahren nach einem der vorangehenden Ansprüche, dadurch gekennzeichnet, daß die Stufen des Verdünnens mit Lösungsmittel und des Verlängerns mit Wasser gleichzeitig durchgeführt werden.

4. Verfahren nach Anspruch 3, dadurch gekennzeichnet, daß das Lösungsmittel ausgewählt ist aus N,N'-Dimethylformamid und N,N'-Dimethylacetamid.

5. Verfahren nach einem der vorangehenden Ansprüche, wobei vor oder während der Verlängerungsreaktion zum Verlängern des Prepolymers eine oder mehrere Verbindungen zum Fixieren von organischen Farbstoffen mit freien Gruppen, ausgewählt aus -COOH, -OH, =N-CH$_3$, zu dem Reaktionsgemisch zugegeben wird/werden.

6. Verfahren nach Anspruch 5, dadurch gekennzeichnet, daß die Fixierverbindungen in einem Molverhältnis, bezogen auf das Diol oder das verwendete Diol, im Bereich von 0,01/1 bis 3/1 zugegeben werden.

7. Verfahren nach einem der Ansprüche 1 bis 6, dadurch gekennzeichnet, daß das Isocyanat ausgewählt ist aus 2,4-/2,6-Toluoldiisocyanat, 4,4'-Diphenylmethan-diisocyanat, 3-Isocyanat-methyl-3,5,5-trimethyl-cyclohexyl-isocyanat, 4,4'-Dicyclohexylmethan-diisocyanat, Hexamethylen-diisocyanat und Gemischen davon.

8. Verfahren nach einem der Ansprüche 1 bis 7, dadurch gekennzeichnet, daß das Polyol ausgewählt ist aus Polyoxytetramethylen-glykol, Polyoxyethylenglykol, Polyoxypropylenglykol, Polycaprolacton-glykol, Polytetramethylen-adipat-glykol, Polyethylenadipat-glykol, Polypropylen-adipat-glykol und Gemischen davon.

9. Verfahren nach einem der Ansprüche 1 bis 8, dadurch gekennzeichnet, daß das Prepolymer erhalten wird durch Umsetzen eines Diisocyanats mit einem Gemisch von 1/9 bis 9/1 und vorzugsweise von 1/4 bis 4/1 (Gew./Gew.) Polyethern/Polyesterdiolen mit einem Molekulargewicht im Bereich zwischen 1000 und 3000.

10. Verfahren nach Anspruch 9, wobei das Gewichtsverhältnis von Polyethern/Polyestern etwa 3/1 beträgt.

11. Verfahren nach Anspruch 9, dadurch gekennzeichnet, daß das Diisocyanat 4,4'-Diphenylmethandiisocyanat, der Polyether Polyoxytetramethylenglykol und der Polyester Polycaprolactondiol ist.

12. Verfahren nach Anspruch 9 oder 10, dadurch gekennzeichnet, daß das Molverhältnis Diisocyanat/Diole im Bereich von 2,75/1 bis 2,86/1 liegt und die Prepolymerisation bei einer Temperatur zwischen 50 und 90°C in Abwesenheit von Lösungsmittel mit einer Reaktionszeit im Bereich von 2 bis 3 Stunden durchgeführt wird.

13. Verfahren nach einem der vorangehenden Ansprüche, dadurch gekennzeichnet, daß die Verlängerungsreaktion in Wasser/Diolen mit einem Molverhältnis im Bereich von 1,2/1 bis 2,0/1 durchgeführt wird.

14. Verfahren nach einem der vorangehenden Ansprüche, wobei das Verlängern in Gegenwart von n-Dibutylamin mit einem Molverhältnis Amin/Diole im Bereich von 0,083 bis 0,167 durchgeführt wird.

15. Verfahren nach einem der vorangehenden Ansprüche, wobei der Vliesstoff erhalten wird durch Coextrudieren von Mikrofasern aus Polyethylenterephthalat oder 6-Polyamid oder 6,6-Polyamid in einer Polystyrolmatrix, Bildung eines Vliesstoffs aus dem coextrudierten Material, Imprägnieren desselben mit Polyvinylalkohol und Entfernen der Polystyrolmatrix und wobei der mit Polyurethan/Polyharnstoff imprägnierte Vliesstoff zwischen Walzen gepreßt, in einem Wasserbad koaguliert, getrocknet, zu Bahnen mit einer vorher festgelegten Dicke geschnitten, oberflächlich abgerieben und gegebenenfalls einem Färben und einer Finish-Behandlung unterworfen wird.

## Revendications

1. Procédé pour la production d'un matériau textile composite, comprenant la préparation d'une base non-tissée et son imprégnation par une solution de polyuréthane-polyurée, caractérisé en ce que la solution de polyuréthane-polyurée est préparée selon un procédé comprenant une étape de prépolymérisation des isocyanates et des polyols, une étape de dissolution du prépolymère ainsi obtenu dans un solvant sélectionné parmi la diméthylformamide, la diméthylacétamide, le diméthyle sulfoxide, l'acétone, la méthyléthyle-cétone, le toluène, le cyclohexane, le tétrahydrofurane, l'acétate d'éthyle, le 2-éthoxy acétate d'éthyle et l'isopropanol, en une solution de prépolymère et une étape de dilution de la solution de prépolymère réalisée par addition d'eau, le groupe isocyanate libre contenu dans ledit prépolymère, pris en poids du prépolymère contenant le groupe isocyanate libre par rapport au poids total des réactifs et du solvant étant compris entre 0.8% à 1.6%, la quantité d'eau étant comprise entre 0.05% à 1.6% du poids du solvant, la solution de polyuréthane ainsi obtenue étant utilisée pour imprégner le matériau microfibreux et non-tissé.

2. Procédé selon la revendication 1, caractérisé en ce que l'eau est ajoutée à une température variable entre 30 et 80°C et à intervalles de temps variables entre 2 minutes et 10 heures.

3. Procédé selon l'une quelconque des revendications précédentes, caractérisé en ce que lesdites étapes de dissolution par le solvant et de dilution à l'eau sont réalisées simultanément.

4. Procédé selon la revendication 3, caractérisé en ce que le solvant est choisi entre N-N' diméthylformamide et N-N' diméthylacétamide.

5. Procédé selon l'une quelconque des revendications précédentes, caractérisé en ce qu'avant et pendant la réaction de dilution du prépolymère, un ou plusieurs composés pour fixer les colorants organiques, ayant des groupes libres choisis parmi - COOH, - OH, = N-CH$_3$, sont ajoutés au mélange réactif.

6. Procédé selon la revendication 5, caractérisé en ce que les composés de fixation sont fournis dans une proportion molaire, en tenant compte du dialcool ou du dialcool utilisé, à l'intérieur d'une gamme allant de 0.01/1 à 3/1.

7. Procédé selon l'une quelconque des revendications 1 à 6, caractérisé en ce que ledit isocyanate est sélectionné parmi du 2-4/2-6 toluène diisocyanate; du 4-4' diphénylméthane diisocyanate; du 3-isocyanate méthyle 3-5-5 triméthyle cyclohexile isocyanate; du 4-4' dicyclohexylméthane diisocyanate; du hexaméthylène diisocyanate et un mélange des précédents.

8. Procédé selon l'une quelconque des revendications 1 à 7, caractérisé en ce que ledit polyol est sélectionné parmi du polyoxytetraméthylène glycol, du polyoexyéthylène glycol, du polyoxypropylène glycol, polycaprolactone glycol, polytetraméthylène adipate glycol, adipate de polyéthylène glycol, adipate de polypropylène glycol et un mélange des précédents.

9. Procédé selon l'une quelconque des revendications 1 à 8, caractérisé en ce que ledit prépolymère est obtenu par réaction d'un diisocyanate avec un mélange de 1/9 à 9/1 et préférentiellement de 1/4 à 4/1 (en poids) de polyéther/polyester dialcool ayant un poids moléculaire variant dans une gamme de 1000 à 3000.

10. Procédé selon la revendication 9, caractérisé en ce que ledit rapport de poids des polyéthers/polyesters est d'environ 3/1.

11. Procédé selon la revendication 9, caractérisé en ce que ledit isocyanate est du 4-4' diphenylméthane diisocyanate, ledit polyéther étant du polyoxytetraméthylène glycol et ledit polyester étant du polycaprolactone dialcool.

12. Procédé selon la revendication 9 ou 10, caractérisé en ce que les proportions molaires diisocyanates/dialcools sont comprises dans une gamme allant de 2.75/1 à 2.86/1, et en ce que ladite prépolymérisation est réalisée à une température variable située entre 50 et 90°C, en l'absence de solvant, et selon une durée de réaction variable située entre 2 et 3 heures.

13. Procédé selon l'une quelconque des revendications précédentes, caractérisé en ce que ladite réaction de dilution est réalisée dans des proportions molaires eau/dialcools variant dans une gamme allant de 1.2/1 à 2.0/1.

14. Procédé selon l'une quelconque des revendications précédentes, caractérisé en ce que ladite dilution est réalisée en présence de n-dibutylamide, dans des proportions molaires amine/dialcools variables situées dans une gamme allant de 0.083 à 0.167.

15. Procédé selon l'une quelconque des revendications précédentes, caractérisé en ce que ledit tissu non-tissé est obtenu en co-extrudant les microfibres de téréphthalate de polyéthylène ou de 6-polyamide ou de 6-6-polyamide dans une matrice de polystyrène, en formant un tissu non-tissé de ce matériau co-extrudé, en l'imprégnant avec de l'alcool polyvinyle et en retirant ladite matrice de polystyrène, et caractérisé en ce que le tissu non-tissé imprégné de polyuréthane-polyurée est essoré entre des rouleaux, coagulé dans un bain d'eau, séché, coupé en feuilles selon des épaisseurs pré-déterminées, érodé superficiellement et éventuellement soumis à une teinture et à une finition.